(19) Europäisches Patentamt
European Patent Office
Office européen des brevets

(11) Numéro de publication: **0 271 386 B1**

(12) # FASCICULE DE BREVET EUROPEEN

(45) Date de publication de fascicule du brevet: **14.08.91**

(51) Int. Cl.5: **H04M 9/08**

(21) Numéro de dépôt: **87402566.1**

(22) Date de dépôt: **13.11.87**

(54) **Circuit de transmission à double sens muni de moyens symétriques de variation automatique du gain selon le sens de transmission.**

(30) Priorité: **17.11.86 FR 8615933**

(43) Date de publication de la demande:
**15.06.88 Bulletin 88/24**

(45) Mention de la délivrance du brevet:
**14.08.91 Bulletin 91/33**

(84) Etats contractants désignés:
**DE GB IT NL SE**

(56) Documents cités:
**FR-A- 2 582 885**
**GB-A- 1 511 487**
**US-A- 3 970 786**

**ELECTRICAL COMMUNICATION, vol. 44, no. 1, 1969, pages 48-51, Londres, GB; K. GALYAS: "Loudspeaking telephone subscriber sets"**

(73) Titulaire: **Zurcher, Frédéric**
**10, rue du Dauphiné**
**F-22300 Lannion(FR)**

(72) Inventeur: **Zurcher, Frédéric**
**10, rue du Dauphiné**
**F-22300 Lannion(FR)**

(74) Mandataire: **Mongrédien, André et al**
**c/o BREVATOME 25, rue de Ponthieu**
**F-75008 Paris(FR)**

**EP 0 271 386 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention a pour objet un circuit de transmission à double sens muni de moyens symétriques de variation automatique du gain selon le sens de transmission.

Les exemples les plus courants de circuits à double sens de transmission sont l'amplificateur pour circuit à deux fils et le poste téléphonique dit "mains libres". Ces dispositifs sont illustrés sur les figures 1 et 2.

Sur la figure 1, on voit deux lignes de transmission L1 et L2 à deux fils reliées par un ensemble amplificateur comprenant un premier amplificateur AMP1 de gain G1, un premier coupleur C1 du genre transformateur différentiel d'affaiblissement minimum A1, un second amplificateur AMP2 de gain G2 et un second coupleur C2 du genre transformateur différentiel d'affaiblissement minimum A2.

Sur la figure 2, on voit une ligne téléphonique L reliée à un coupleur C, (du genre transformateur différentiel) introduisant un affaiblissement minimum A2, un premier amplificateur AMP1 de gain G1, un haut-parleur HP, un microphone M et un second amplificateur AMP2 de gain G2. Un affaiblissement minimum A1 caractérise le couplage entre le haut-parleur et le microphone.

Quel que soit le système envisagé, une instabilité apparaît si, dans la boucle formée par les divers coupleurs et amplificateurs, les gains l'emportent sur les affaiblissements. Cette condition d'instabilité peut s'écrire :

$$G1 + G2 > A1 + A2.$$

Dans le cas du poste mains libres, on parle d'instabilité de Larsen.

Ce phénomène d'instabilité est bien connu. Pour l'éviter, ne pouvant jouer facilement sur les affaiblissements A1 et A2, on préfère agir sur les gains G1 et G2 de telle sorte que l'inégalité précédente ne soit pas satisfaite. On a alors recours à des amplificateurs à gain variable. Un gain maximal est attribué à l'amplificateur correspondant au sens de transmission utilisé, tandis que, dans le même temps, un gain minimum est attribué à l'amplificateur correspondant au sens opposé, la somme des gains restant inférieure à la valeur provoquant l'instabilité. Cette situation est renversée à chaque changement de sens de transmission.

Avec des variantes plus ou moins complètes, de tels systèmes sont évoqués ou décrits dans les documents FR-A-2 514 595 et FR-A-2376 576.

Le schéma synoptique d'un système à gain variable en fonction du sens de transmission est représenté sur la figure 3. Le système comprend deux voies d'amplification AMP1 et AMP2 constituées chacune par un amplificateur de gain fixe (respectivement G'1 et G'2) et par une ligne à affaiblissement variable (respectivement AV1 et AV2). Le gain global des voies AMP1 et AMP2 est donc respectivement G1 = G'1-AV1 et G2 = G'2-AV2. Un transfert s'effectue entre la sortie S1 de AMP1 et l'entrée E2 de AMP2 avec un affaiblissement A1 ; de manière symétrique, un transfert s'effectue entre la sortie S2 de AMP2 et l'entrée E1 de AMP1 avec un affaiblissement A2. La structure des moyens à l'origine de ces deux transferts n'a pas été spécifiée sur la figure, pour plus de généralité.

Le circuit de commande des affaiblissements est noté CAV. Ce circuit possède deux entrées e1 et e2 reliées aux voies AMP1 et AMP2 et deux sorties s1 et s2 qui délivrent des signaux de commande qui sont appliqués sur les lignes d'affaiblissement dont ils déterminent les affaiblissements AV1 et AV2. Le circuit CAV est conçu de telle sorte que l'inégalité G1 + G2 < A1 + A2, qui assure la stabilité du système soit satisfaite à toutes les fréquences. Cette inégalité peut s'écrire encore :

$$(G'1-AV1) + (G'2-AV2) < A1 + A2,$$

soit encore :

$$AV1 + AV2 > (G'1 + G'2) - (A1 + A2).$$

En d'autres termes, il faut que la somme des affaiblissements variables AV1 et AV2 excède une certaine valeur.

Un exemple fera comprendre la signification de cette inégalité. On veut travailler avec des amplificateurs de gain 20 dB chacun et les affaiblissements A1 et A2 sont garantis supérieurs à 10 dB. On choisira donc des affaiblissements variables AV1 et AV2 tels que :

$$AV1 + AV2 > (20 + 20) - (10 + 10)$$

soit

AV1 + AV2 > 20 dB.

On donnera donc à la somme AV1 + AV2 une valeur supérieure à 20 dB, soit par exemple 22 dB.

En pratique, on se fixe donc une valeur d'affaiblissement AVmax assurant la stabilité du système et l'on agit sur AV1 et AV2 de telle sorte qu'on ait toujours AV1 + AV2 = AVmax. Naturellement, on privilégie la voie correspondant au sens de transmission prédominant en lui donnant l'affaiblissement minimal et on donne à l'autre voie un affaiblissement maximal.

Un système de ce genre est décrit dans la revue "Telecommunication" pp 70-76 par W.D PACE et al. dans un article intitulé "A low-cost voice-switched speakerphone IC". Dans un tel système la somme des gains des deux voies est maintenue constante pendant les périodes de travail et le système est dans l'un quelconque de trois états : un état d'émission où l'atténuation de la voie d'émission a le plus fort gain (c'est-à-dire l'affaiblissement le plus faible), un état de réception où c'est l'atténuateur de la voie de réception qui a le plus fort gain, et un état de repos où les deux atténuateurs sont dans le même état.

Le choix de l'un de ces trois états est déterminé par un circuit qui détecte les signaux véhiculés sur chacune des deux voies, qui compare ces signaux l'un à l'autre et qui détecte en outre le rapport signal sur bruit dans la voie de transmission.

Pour comparer les signaux d'émission et de réception, il est fait usage de deux amplificateurs logarithmiques, de deux détecteurs crête et d'un comparateur différentiel. L'entrée des amplificateurs est reliée à la sortie des atténuateurs des deux voies. La comparaison s'effectue donc entre les signaux apparaissant à la sortie de chaque voie, (ce qui, sur la figure 3, reviendrait à relier les entrées e1 et e2 du circuit CAV aux sorties de AV1 et AV2).

Les moyens de détection du rapport signal sur bruit comprennent un amplificateur relié au microphone, un détecteur d'enveloppe, un condensateur de maintien du minimum de l'enveloppe (ce minimum représentant le niveau de bruit ambiant dans la voie d'émission), un comparateur dont une entrée reçoit cette tension minimum et une seconde entrée qui reçoit la valeur instantanée de la tension d'enveloppe. Ce comparateur a une tension de décalage ("offset") fixe, réglée par exemple à 36 mV. Lorsque la tension instantanée excède le minimum d'une valeur supérieure au décalage fixe, le comparateur bascule et indique qu'un signal de parole est présent sur la voie d'émission. Pour éviter les changements d'état intempestifs en cours de conversation pendant les courts intervalles de temps où le signal de parole dans la voie d'émission tombe à zéro, il est prévu, dans le circuit de détection du rapport signal sur bruit, des constantes de temps suffisamment longues.

Bien que donnant satisfaction à certains égards, un tel circuit présente des inconvénients qu'on peut résumer ainsi :

- le niveau d'émission qui sert à commander l'affaiblissement de la voie d'émission est mesuré derrière l'atténuateur de cette voie, ce qui gêne la commutation rapide du sens réception vers le sens d'émission,
- le niveau de bruit de fond est déterminé en fonction du seul bruit à l'émission,
- le fonctionnement est dissymétrique, ce qui n'autorise pas les utilisations en répéteur deux fils et en audioconférence,
- au niveau de la comparaison signal d'émission-signal de réception, il n'y a pas de correction tenant compte de la différence de bruit de fond entre l'émission et la réception,
- les constantes de temps sont les mêmes pour aller à la position de repos des atténuateurs ou pour passer à l'une des positions d'émission ou de réception, ce qui peut conduire à des changements d'état intempestifs en cas de silences un peu prolongés,
- le réglage de la plage de variation du gain est difficile,
- le gain de boucle n'est pas maintenu à la même valeur dans la position de repos que dans les positions émission ou réception,
- il n'y a pas de maintien rigoureux du gain de boucle dans les zones transitoires permettant de passer d'un état à un autre.

On connaît en outre un circuit de transmission de ce type par l'article de George W. REICHARD, Jr et al intitulé "The 4A speakerphone - A hands-Down Winner" publié dans la revue Bell Laboratories Record de Septembre 1973, pp 233-237. Dans un tel circuit le signal est prélevé avant affaiblissement, le gain de boucle est constant et on effectue un traitement pour tenir compte du bruit. Mais ce traitement n'est pas symétrique et s'effectue uniquement sur la voie émission. Par ailleurs, les transitions entre modes de fonctionnement ne sont pas identiques. Par exemple, après arrêt du locuteur, il y a retour vers le mode

réception, et ce avec une grande constante de temps.

La présente invention a justement pour but de remédier à ces inconvénients en traitant les deux signaux prélevés sur les deux voies pour engendrer un signal logique indiquant si la demi-somme des signaux d'entrée est supérieure ou non à un seuil donné, puis en corrigeant symétriquement les deux signaux prélevés par un signal de correction qui est ajouté à l'un et retranché à l'autre. La présente invention prévoit en outre un circuit de calcul des affaiblissements qui permet, en fonction des deux signaux corrigés (SM1 et SM2) et du signal logique, de commander de façon adéquate les affaiblissements des deux voies.

Le circuit de commande des affaiblissements détermine lequel des signaux SM1 et SM2 l'emporte sur l'autre, autrement dit quel est le sens de transmission. Le circuit donne alors un affaiblissement nul à la ligne d'affaiblissement correspondante et un affaiblissement maximum AVmax à l'autre ligne. Mais cette configuration n'est pas prise instantanément. Elle s'établit avec une constante de temps t1, assez courte, par exemple avec des incrémentations de ± 1,5 dB, toutes les 2,5 millisecondes.

Inversement, lorsque l'on revient à une situation où le signal utile moyen est inférieur au minimum SEmin, le circuit de calcul des affaiblissements redonne aux lignes des affaiblissements égaux à 1/2 AVmax, mais avec une constante de temps t2 beaucoup plus longue que t1 (par exemple 100 ms pour 1,5 dB).

L'avantage de cette double constante de temps est le suivant : la première, relativement faible, permet de donner rapidement à la voie qui commence à travailler un affaiblissement minimum, donc une amplification maximum, et de permuter rapidement cette configuration en cas de changement de sens de transmission ; la seconde, relativement longue, permet de ralentir la variation d'affaiblissement, donc de gain, dans le cas où aucun signal utile n'est présent sur la ligne, sans qu'il y ait pour autant changement de sens de transmission comme c'est le cas notamment dans les périodes de silence qui séparent les mots et les syllabes prononcés par un même interlocuteur qui garde la parole.

De façon plus précise, l'invention a pour objet un circuit de transmission à double sens ayant une première voie amplificatrice fonctionnant dans un premier sens de transmission comprenant une première ligne d'affaiblissement variable, et une seconde voie amplificatrice fonctionnant dans un second sens de transmission comprenant une seconde ligne d'affaiblissement variable, le dispositif comprenant un circuit de commande des affaiblissements ayant deux entrées reliées respectivement aux première et seconde voies et recevant à partir de ces voies, respectivement des signaux détectés ci-après désignés SE1 et SE2, ces signaux étant obtenus à partir des première et deuxième voies amplificatrices, en amont des première et seconde lignes d'affaiblissement, le circuit de commande qui inclut un circuit de calcul des affaiblissements variables AV1 et AV2 étant apte à commander chacun des affaiblissements variables AV1 et AV2 en fonction des signaux qu'il reçoit, de telle manière que la relation AV2 = AVmax-AV1 soit satisfaite en permanence pour les deux sens de transmission, le dispositif étant caractérisé par le fait que le circuit de commande des affaiblissements comprend :

- un circuit de discrimination de signal utile par rapport au bruit, ayant des entrées recevant les premier et deuxième signaux détectés SE1 et SE2, et une sortie délivrant un signal logique SU/SB indiquant si la demi-somme desdits signaux d'entrée (SE1 + SE2)/2 est supérieure ou non à un seuil donné SEmin,
- un circuit de correction à trois entrées, l'une recevant le signal logique SU/SB et les deux autres respectivement les premier et deuxième signaux détectés SE1 et SE2, ce circuit de correction possédant deux sorties délivrant des premier et second signaux corrigés SM1, SM2, le premier signal corrigé SM1 étant égal au premier signal détecté SE1 auquel est ajouté un signal de correction (SE)c et le second signal corrigé SM2 étant égal au second signal détecté SE2 auquel est retranché ledit signal de correction (SE)c, ce signal de correction évoluant de la manière suivante :

a) pendant les périodes de signal utile où le signal logique SU/SB indique que la demi-somme des signaux d'entrée est supérieure au seuil SEmin : (SE)c ne varie pas,

b) pendant les périodes où le signal logique SU/SB indique que cette demi-somme est inférieure au seuil :

i) si SM1 > SM2 :

(SE)c décroît jusqu'à ce que SM1 soit égal à SM2 et à la valeur commune (SE1 + SE2)/2, puis ne varie plus,

ii) si SM1 < SM2 :

(SE)c croît jusqu'à ce que SM1 soit égal à SM2 et à la valeur commune (SE1 + SE2)/2, puis ne varie plus ;

- un circuit de calcul des affaiblissements ayant une première entrée reliée à la sortie du cicuit de discrimination et recevant le signal logique SU/SB et deux autres entrées recevant les premier et

second signaux corrigés SM1, SM2, ce circuit de calcul des affaiblissements ayant en outre deux sorties délivrant des signaux aptes à commander les affaiblissements AV1 et AV2 des atténuateurs à affaiblissement variable de la manière suivante :

1) si le signal logique SU/SB indique que (SE1 + SE2)/2 est inférieur au seuil donné SEmin :

. AV1 est égal à 1/2 AVmax ou tend vers cette valeur avec une constante de temps donnée t2,

2) si le signal logique SU/SB indique que (SE1 + SE2)/2 est supérieur ou égal au seuil donné SEmin :

a - si SM1 > SM2

. AV1 est égal à 0 ou tend vers 0 avec une deuxième constante de temps t1 inférieure à ladite constante de temps donné (t2),

b - si SM1 < SM2

. AV1 est égal à AVmax ou tend vers cette valeur avec la deuxième constante de temps.

Le signal représentatif du seuil donné SEmin peut avoir une valeur prédéterminée ou une valeur variable. Dans ce dernier cas et selon un mode privilégié de réalisation, le circuit de discrimination comporte des moyens pour délivrer le signal variable représentatif du seuil donné, ces moyens étant tels que ledit signal variable est constitué de la somme d'une première composante fixe et d'une deuxième composante croissante ou décroissante, ladite deuxième composante (Vs) étant croissante jusqu'à atteindre une valeur maximale si elle reste inférieure à la demi-somme desdits signaux d'entrée pendant un intervalle de temps supérieur à une durée fixée Tmax, et décroissante dans tous les autres cas.

De toute façon, les caractéristiques et avantages de l'invention apparaîtront mieux à la lecture de la description qui suit, d'exemples de réalisation donnés à titre explicatif et nullement limitatif. Cette description se réfère à des dessins annexés, sur lesquels :

- la figure 1, déjà décrite, représente un amplificateur pour circuit à deux fils,
- la figure 2, déjà décrite, représente un poste téléphonique "mains libres",
- la figure 3, déjà décrite, est un schéma synoptique d'un système de réglage de gain dans un dispositif à double sens de transmission,
- la figure 4 montre un exemple d'évolution des signaux et la variation concomitante des affaiblissements selon l'invention,
- la figure 5 illustre une variante de l'invention dans laquelle la tension minimum varie,
- la figure 6 représente le schéma général du circuit de l'invention,
- la figure 7 montre un circuit de discrimination entre signal utile et signal de bruit,
- la figure 8 montre un circuit de correction,
- la figure 9 montre un circuit de calcul d'affaiblissement,
- la figure 10 montre un comparateur,
- la figure 11 montre un dispositif de contrôle d'un compteur-décompteur.

La figure 4 illustre les différents cas que l'on peut rencontrer dans la pratique. L'axe des abscisses correspond au temps. La partie (b) de la figure suit la partie (a) chronologiquement. La ligne supérieure représente l'évolution des signaux SE1 et SE2 et la ligne inférieure l'évolution correspondante des affaiblissements AV1 et AV2. Les caractéristiques de la première voie SE1 et AV1 sont dessinées en trait continu alors que les caractéristiques de la seconde voie (SE2 et AV2) sont dessinées en trait interrompu.

Une valeur minimum SEmin permet de définir des intervalles SU pendant lesquels il existe au moins un signal utile tel que 1/2(SE1 + SE2)>SEmin et des périodes SB où il n'y a que du bruit (1/2(SE1 + SE2)-<SEmin).

Le diagramme représenté montre ainsi un premier intervalle de bruit SB1, un premier intervalle utile SU1, puis un second intervalle utile SU2, puis des intervalles SB2, SU3 (figure a), SB3, SU4, SB4, SU5, SB5, SU6, SU7 (figure b).

Pendant l'intervalle SB1, AV1 et AV2 sont égaux à 1/2AVmax (deuxième ligne de la partie a). Le passage de SB1 à SU1 fait passer AV1 à 0 et AV2 à AVmax (car c'est SE1 qui l'emporte), ces passages s'effectuant avec la constante de temps t1 faible. Autrement dit AV1 et AV2 prennent rapidement leur valeur, ce que traduit la forte pente des droites montrant les variations des affaiblissements. Cette situation est renversée lors du passage de SU1 à SU2 car alors c'est SE2 qui l'emporte sur SE1. Alors AV1 devient égal à AVmax et AV2 tombe à 0, ces passages s'effectuant avec la même constante de temps t1.

Puis 1/2(SE1 + SE2) tombe en-dessous du minimum SEmin (phase SB2). Alors AV1 et AV2 retrouvent tous deux la valeur moyenne 1/2AVmax, et cela avec la constante de temps t2, qui est grande devant t1.

On peut résumer ces différents cas par les égalités ou inégalités suivantes :

1) - si 1/2(SE1 + SE2)<SEmin,

. AV1 est égal à 1/2AVmax ou tend vers cette valeur avec une constante de temps forte (t2),

. AV2 est égal à 1/2AVmax ou tend vers cette valeur avec une constante de temps forte (t2) ;

2) - Si 1/2(SE1 + SE2)>SEmin,

a) si SE1>SE2
AV1 est égal à 0 ou tend vers 0 avec une constante de temps faible (t1),
AV2 est égal à AVmax ou tend vers cette valeur avec une constante de temps faible (t1),
b) Si SE2>SE1
AV1 est égal à AVmax ou tend vers cette valeur avec une constante de temps faible (t1),
AV2 est égal à 0 ou tend vers 0 avec une constante de temps faible (t1).

Dans tous les cas de figure, la relation AV1 + AV2 = AVmax doit rester vérifiée en permanence (y compris pendant les phases de croissance et de décroissance des affaiblissements).

Dans les diagrammes qui précèdent, le minimum SEmin à partir duquel la croissance ou la décroissance des affaiblissements est déclenchée, est supposé fixe. Mais cela n'est pas obligatoire. Au contraire, il est préférable de donner à ce minimum une valeur lentement variable qui permet d'adapter le circuit aux conditions d'exploitation. Celles-ci sont en effet très variées et le signal de bruit (SB) peut prendre des valeurs très inégales selon les cas. Par exemple, le bruit de fond d'un système de climatisation situé à proximité d'un poste téléphonique mains libres peut engendrer une situation particulière à fort bruit.

Le critère d'adaptation du minimum retenu par l'invention est basé sur la remarque suivante. La parole est un signal discontinu. La durée maximale d'un son de parole excède rarement 200 ms environ. On peut définir alors une durée Tmax (de l'ordre de cette valeur) et déterminer le temps pendant lequel 1/2-(SE1 + SE2) reste supérieur à un certain seuil Vs. Si ce temps excède Tmax, cela signifie qu'on n'est pas en présence d'un simple signal de parole mais en présence d'un bruit. Le seuil Vs est alors lentement augmenté. L'accroîssement de Vs commence donc dès que l'intervalle pendant lequel 1/2(SE1 + SE2) excède le seuil, dépasse Tmax. Cet accroîssement dure tant que 1/2(SE1 + SE2) reste au-dessus du seuil. La constante de temps est choisie élevée et de l'ordre de plusieurs secondes. En dehors de ces périodes de croissance, on diminue lentement le seuil avec la même constante de temps longue.

On forme ainsi une tension Vs qui prend une valeur qui oscille faiblement autour d'une valeur d'équilire qui est celle de l'enveloppe des crêtes du signal de bruit. Il reste alors à choisir le minimum SEmin. Pour cela, ce minimum sera pris légèrement supérieur à Vs (pour être pratiquement toujours légèrement au-dessus du signal de bruit non utile) en ajoutant à Vs une tension $\epsilon$ faible et constante. On a donc SEmin = Vs + $\epsilon$ avec Vs lentement variable.

Pour ne pas défavoriser des signaux autres que les signaux de parole et qui ont des enveloppes de crêtes relativement stables, Vs est cependant limité à une valeur Vsmax déterminée de telle sorte qu'elle se situe en-dessous des enveloppes de crêtes des signaux utiles autres que les signaux de parole.

En résumé, le minimum adaptatif est défini par les conditions suivantes :

$$SEmin = Vs + \epsilon$$

avec :

i) si 1/2(SE1 + SE2)>Vs
- depuis un temps supérieur à Tmax, alors Vs augmente avec une constante de temps très longue tout en restant inférieur à Vsmax,
- depuis un temps inférieur à Tmax, alors Vs diminue, avec la même constante de temps,

ii) si 1/2(SE1 + SE2)<Vs, alors Vs diminue avec la même constante de temps.

La figure 5 illustre l'évolution de ce minimum adaptatif. On y voit la rampe croissante ou décroissante de la tension de seuil Vs et le signal 1/2(SE1 + SE2). Lorsque ce signal reste au-dessus de Vs pendant une durée qui dépasse Tmax, la pente de Vs, qui était négative, devient positive. Ce changement de pente se produit trois fois sur le diagramme de la figure 5. La tension Vs se remet à décroître dès que 1/2-(SE1 + SE2) redevient inférieur à Vs.

Par ailleurs, la comparaison de 1/2(SE1 + SE2) avec Vs + $\epsilon$ = Semin permet de définir, comme pour la figure 4, des intervalles à signal de bruit SB et des intervalles à signal utile (SU).

Dans ce qui précède, le sens de variation de AV1 et AV2 est fonction de la comparaison entre SE1 et SE2. Mais en réalité, SE1 et SE2 sont constitués chacun d'un signal utile et d'un signal de bruit additif. Les signaux de bruits additifs peuvent être très différents entre les deux sens. Il convient donc de faire en sorte d'éliminer leur influence sur le résultat de la comparaison entre SE1 et SE2.

Pour obtenir ce résultat, les signaux pris en compte pour le calcul des affaiblissements seront constitués des signaux enveloppe des crêtes SE1 et SE2 auxquels on ajoutera ou retranchera une tension de correction (SE)c :

$$SM1 = SE1 + (SE)c \text{ et } SM2 = SE2-(SE)c$$

le signal de correction (SE)c est tel que la relation SM1 = SM2 soit vérifiée pendant la période d'absence du signal utile (notée SB sur les diagrammes des figures 4 et 5).

Ce signal de correction (SE)c est déterminé comme suit :

1) - pendant les périodes de signal utile :

(SE)c ne varie pas ;

2) - pendant les périodes d'absence de signal utile :

a) si SM1>SM2 :

(SE)c décroît jusqu'à ce que SM1 = SM2 = (SE1 + SE2)/2, puis ne varie plus,

b) si SM1>SM2 :

(SE)c croît jusqu'à ce que SM1 + SM2 = (SE1 + SE2)/2, puis ne varie plus.

La constante de temps est choisie grande, de l'ordre de quelques secondes, pour s'adapter à des bruits de fond moyens.

Une situation d'équilibre s'installera telle que (SE)c oscillera faiblement autour d'une valeur qui permettra à la relation SM1 = SM2 d'être vérifiée en dehors des périodes de signal utile. Ainsi, un signal utile relativement faible sur un sens pourra prédominer sans problème par rapport à un signal bruité non utile, relativement élevé, sur l'autre sens.

On peut préciser les questions en imaginant deux situations telles que :

a) SE1 correspond à du bruit et vaut 100 mV,

SE2 correspond à du bruit et vaut 10 mV,

b) SE1 correspond à du bruit et vaut 10 mV,

SE2 correspond à du bruit et vaut 100 mV.

Dans ces deux situations, la tension de correction varie de la manière suivante :

a) (SE)c tend vers -45 mV de telle sorte que SM1 et SM2 tendent vers (SE1 + SE2)/2 qui vaut alors 55 mV,

b) (SE)c tend vers +45 mV de telle sorte que SM1 et SM2 tendent vers (SE1 + SE2)/2 qui vaut encore 55 mV.

Ainsi, pour passer de la situation a) à la situation b), la tension de correction doit varier de 90 mV. Si l'on avait choisit une correction asymétrique, affectant un seul des signaux, par exemple le premier, il aurait fallu une tension de correction de -90 mV dans le cas a) et de +90 mV dans le cas b), soit une excursion de tension de 180 mV, ce qui est le double de la valeur nécessaire dans le cas d'une correction symétrique. Cette dernière est donc plus rapide. Par ailleurs, la comparaison entre les signaux corrigés SM1 et SM2 est rendue plus symétrique.

Après cette description des principes de fonctionnement du circuit de l'invention, on va décrire un mode de réalisation en se référant aux figures 6 à 11.

La figure 6 donne le schéma de principe général du dispositif. Il s'agit d'un octopôle 1 défini par quatre accès EE (Emission Entrée), ES (Emission Sortie), RE (Réception Entrée) et RS (Réception Sortie) chaque accès étant à deux fils. Du point de vue fonctionnel ce circuit présente une symétrie parfaite, les paires de bornes (EE et RE) d'une part, et (ES et RS) d'autre part pouvant être permutées sans altération du fonctionnement.

Le coupleur 7 peut être constitué d'un ou plusieurs microphones suivi(s) de préamplificateurs-microphones attaquant la borne EE et d'un ou plusieurs haut-parleurs attaqué(s) par un ou plusieurs amplificateurs de puissance recevant le signal présent à la borne RS. On référencera ce mode de réalisation par 71. Il peut être constitué d'un dispositif de passage de deux fils à quatre fils. On référencera ce mode de réalisation par 72. Les mêmes éléments peuvent être utilisés dans le coupleur 6 (bornes EE et RS remplacées par RE et ES). Les deux cas particuliers correspondants sont référencés 61 et 62.

Toutes les combinaisons de cas sont possibles pour l'association des coupleurs 6 et 7 : 71-61 ou 71-62 ou 72-61 ou 72-62.

Les utilisations les plus courantes peuvent être :

- le téléphone mains libres ; ce sont les cas 71-62 et 72-61 avec un couplage électro-acoustique à une extrémité et un couplage électrique à l'autre,
- l'amplificateur (dit souvent répéteur) deux fils ; c'est le cas 2-62 ; il y a un couplage électrique aux deux extrémités,
- l'audio-conférence ; c'est le cas 71-61 ; il y a un couplage électro-acoustique aux deux extrémités ; 1 et 7 représentent une installation d'audio-conférence locale ; 6 représente l'installation d'audio-conférence éloignée (avec ou sans dispositif identique ou équivalent à 1) reliée à 1 par une liaison quatre fils, numérique ou analogique.

L'affaiblissement inséré entre les bornes RS et EE par le coupleur 7 est noté A2 comme plus haut. Celui qui est inséré entre les bornes ES et RE par le couplage 6 est noté A1.

En allant de la borne EE à la borne ES, on trouve un amplificateur 10 avec un gain G'1 correspondant au gain émission dans une phase stable où il y a présence de signal utile et supériorité (en niveau) du signal présent en EE par rapport au signal présent en RE. L'amplificateur 10 est suivi d'un circuit limiteur d'amplitude optionnel 11 que délivre un signal S1. On trouve enfin un circuit d'affaiblissement variable 15 introduisant un affaiblissement variable AV1 compris entre zéro et AVmax et commandé numériquement par un organe de commande d'affaiblissement 5.

Entre les bornes RE et RS, on trouve des circuits identiques, ayant respectivement les mêmes fonctions et notés 20 (gain G'2), 21 et 25 (affaiblissement AV2). Le limiteur 21 (optionnel) délivre un signal S2.

Entre 11 et 15, on trouve une dérivation vers une ligne d'affaiblissement réglable optionnelle 12 (affaiblissement A11) attaquant un circuit de redressement double alternance 13. Entre 21 et 25, on trouve une dérivation identique avec respectivement 22 (affaiblissement A21) et 23.

Les lignes d'affaiblissement optionnelles 12 et 22 peuvent servir à parfaire le fonctionnement du dispositif en présence d'affaiblissement A2 et A1 connus et nettement différents.

En présence d'un signal d'émission uniquement, la différence entre les niveaux de S1 et S2 est de A1. En présence d'un signal de réception uniquement, la différence entre les niveaux de S2 et de S1 est de A2. Pour ne pas favoriser un sens de transmission par rapport à l'autre, il faudrait que ces différences soient égales.

Pour arriver ce résultat, il suffit d'insérer les affaiblissements A11 et A21 suivants :

$$\text{si } A2 > A1 \; \begin{cases} A21 = (A2-A1)/2 \\ A11 = 0 \end{cases}$$

$$\text{si } A1 > A2 \; \begin{cases} A11 = (A1-A2)/2 \\ A21 = 0 \end{cases}$$

Ces insertions ont l'avantage de ne jouer que sur les niveaux mesurés et non sur les niveaux transmis en phase stable (le choix du sens dominant est amélioré, mais le niveau transmis du sens dominant n'est pas affecté).

Les redresseurs 13 et 23 qui délivrent des signaux SR1 et SR2 attaquent aussi des détecteurs d'enveloppe de crêtes 14 et 24 qui délivrent les signaux SE1 et SE2. Ces détecteurs ont une constante de temps relativement faible (par exemple 5 ms) à la montée pour réagir très vite à un changement de sens de transmission ou à l'apparition d'un signal utile. Ils ont une constante de temps relativement élevée à la descente (par exemple 50 ms) pour ne pas provoquer de variations de gain intempestives pendant les silences intersyllabiques par exemple. Il est d'ailleurs préférable que la décroisance soit du deuxième ordre. Dans le cas où un des deux coupleurs 7 ou 6 introduit un couplage élctro-acoustique (et l'autre non) il introduit un retard dû au trajet acoustique direct mais surtout aux trajets acoustiques indirects multiples. Il est intéressant de compenser ce phénomène au niveau de la mesure en augmentant d'autant la constante de temps à la descente de 14 si le trajet acoustique est en 6 et de 24 si le trajet acoustique est en 7. Les signaux SE1 délivrés par le détecteur 14 et SE2 délivrés par le détecteur 24 sont dirigés vers un dispositif 3 qui est un détecteur de signaux utiles et qui délivre un signal de commande (noté SU/SB) logique égal à 1 en présence de signal utile (SU) et à 0 dans le cas contraire.

Les signaux SE1 délivrés par 14 et SE2 délivrés par 24 sont aussi dirigés vers un circuit de correction d'enveloppe de crêtes 4 qui a pour fonction d'ajouter la tension de correction (SE)c positive ou négative à SE1 et de retrancher cette tension de correction à SE2, pour que dans les périodes de signal de bruit (SB) la tension SM1 = SE1 + (SE)c tende en permanence vers SM2 = SE2-(SE)c. Pour cela le circuit 4 reçoit aussi le signal SU/SB délivré par 3. Le dispositif 5 de calcul des affaiblissements est attaqué par les signaux analogiques SM1 et SM2 et par le signal logique SU/SB, signaux délivrés respectivement par 4 et 3. Le dispositif 5 donne sur n fils une sortie notée AV1 et représentant un nombre binaire de n éléments binaires déterminant la valeur de l'affaiblissement AV1 de la ligne d'affaiblissement 15 (exemple n = 4 et l'affaiblissement est égal à (AV1 x 1,5) dB, l'unité d'affaiblissement valant 1,5 dB). Le dispositif 5 donne sur n autres fils la sortie notée AV2 et commandant l'affaiblissement de la ligne 25.

La figure 7 représente le dispositif 3 de discrimination entre signal utile SU et signal de bruit SB. Les signaux d'entrée du dipositif 3, SE1 et SE2 sont additionnés dans un sommateur 31 avec un gain de 0,5. Le circuit 31 délivre donc un signal (SE1 + SE2)/2 qui représente l'enveloppe de crête moyenne des deux

signaux S1 et S2. Ce signal attaque sur son entrée positive un comparateur différentiel 32 qui reçoit sur son entrée négative un signal noté Vs élaboré dans les circuits 33, 34, 35 et 36. Le signal de sortie de 32 est un signal logique égal à 1 si $1/2(SE1+SE2)>Vs$ et égal à 0 dans le cas contraire. Ce signal attaque une bascule monostable 33, qui à chaque front positif présent sur son entrée, déclenche une impulsion négative à sa sortie (état 0 durant la durée de l'impulsion) d'une durée Tmax. Les sorties de 32 et de 33 attaquent aussi une porte logique de jonction ET 34. Cette porte délivre donc un signal logique 1 chaque fois que $1/2(SE1+SE2)>Vs$ depuis un temps supérieur à Tmax. La porte 34 attaque un dispositif de symétrisation 35 qui, à une entrée 1, fait correspondre une sortie analogique +V et à une entrée 0 une sortie analogique -V. Ce dispositif 35 attaque à son tour un circuit intégrateur 36 dont la sortie augmente selon une rampe linéaire si 35 délivre une tension +V et dont la sortie diminue selon une rampe linéaire si 35 délivre une tension -V. La sortie de 36 est limitée à une valeur maximum égale à Vsmax (par un pont diviseur par exemple). Ainsi, donc, Vs augmente si $1/2(SE1+SE2)>Vs$ depuis un temps supérieur à Tmax (et si $Vs<Vsmax$). Il diminue si $1/2(SE1+SE2)<Vs$. La constante d'intégration de 36 est assez importante (exemple : 4 secondes). Vs attaque un sommateur 37 dans lequel il est ajouté une tension fixe $\epsilon$ relativement faible (par exemple $\epsilon$ est égal à 0,5% de la valeur maximum qui peut atteindre 1/2(SE1 + SE2)). Le signal 1/2(SE1 + SE2) sortant de 31 est comparé au signal $SEmin=(Vs+\epsilon)$ sortant du sommateur 37 dans le comparateur différentiel 38 qui délivre un signal logique SU/SB égal à 1 si $1/2(SE1+SE2)>SEmin$, c'est-à-dire en présence de signal utile, et égal à 0 dans le cas contraire.

La figure 8 représente le dispositif 4 de correction de SE1 et SE2 qui ajoute à SE1 une tension de correction positive ou négative (SE)c et qui retranche à SE2 cette même tension de correction pour que, dans les périodes de bruit (SB), la tension SM1 tende en permanence vers l'égalité avec SM2. Un comparateur différentiel 41 reçoit sur son entrée positive le signal de sortie SM2 et sur son entrée négative le signal de sorti SM1. L sortie de 41 est égale à +V si $SM2>SM1$ et à -V si $SM1>SM2$. La sortie du comparateur est reliée à un intégrateur 43 à travers un interrupteur 42 qui est fermé quand son signal de commande SU/SB est à 0 (SB) et ouvert quand il est à 1 (SU). L'intégrateur 43 délivre une tension de correction (SE)c qui ne varie pas si l'interrupteur 42 est ouvert. Si l'interrupteur 42 est fermé (pendant SB), (SE)c augmente selon une rampe linéaire si 41 délivre une tension +V et diminue selon une rampe linéaire si 41 délivre une tension -V. La constante de temps d'intégration est relativement importante (par exemple : 4 secondes). La plage de variation de (SE)c est limitée : $|(SE)c|\leq|(SE)cmax|$ (à l'aide d'un pont diviseur par exemple. (SE)c est additionné à SE1 dans un sommateur 44 qui délivre le signal SM1. (SE)c est retranché de SE2 dans un soustracteur 45 qui délivre le signal SM2. Ainsi, (SE)c varie de telle sorte que pendant les périodes (SB) on tende en permanence vers l'égalité $SM1=SM2$. Pendant les périodes SU, (SE)c garde sa dernière valeur d'avant passage de (SB) à (SU).

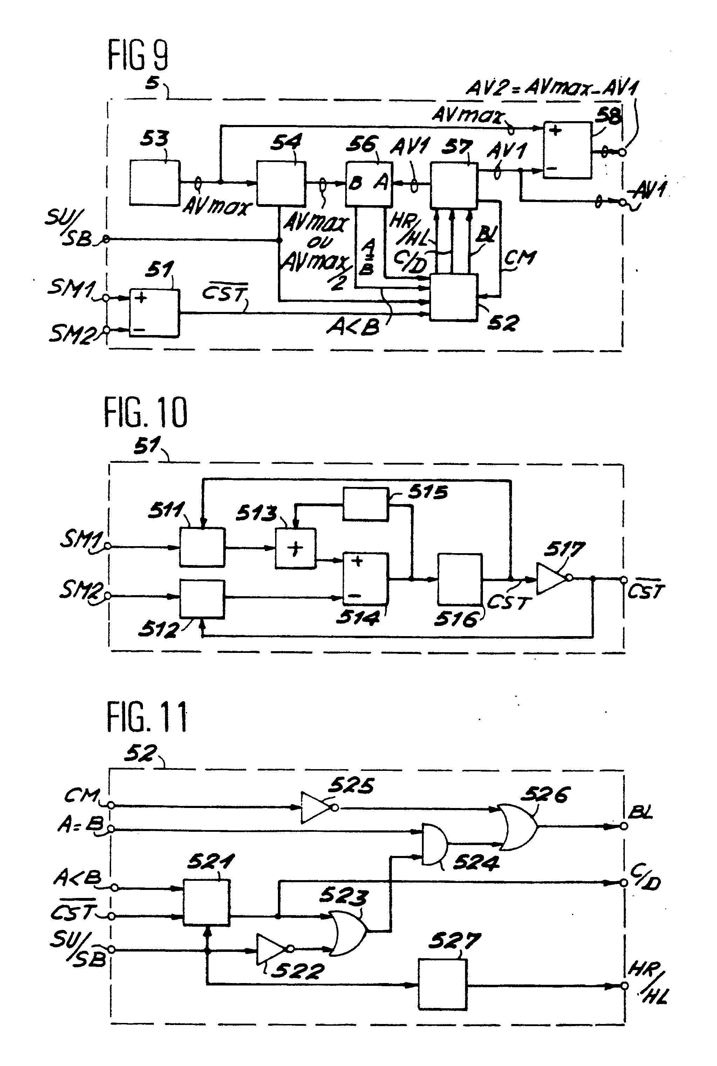

La figure 9 représente le dispositif 5 de calcul des affaiblissements. Les signaux SM1 et SM2 attaquent respectivement les entrées positives et négatives d'un comparateur différentiel 51. Celui-ci délivre un signal logique référencé $\overline{CST}$ (choix du sens de transmission) égal à "1" si (en première approximation) $SM1>SM2$ et égal à "0" dans le cas contraire. Le dispositif 53 est un moyen manuel (roue codeuse) ou informatique pour délivrer sur n fils un nombre binaire de n bits égal à AVmax. Le dispositif 54 délivre un nombre AVmax en présence de signaux utiles ($SU/SB=1$) et 1/2AVmax dans le cas contraire. Les n fils représentant ce nombre binaire attaquent un comparateur arithmétique 56 sur ses entrées notées B. Ce comparateur 56 reçoit aussi, sur ses entrées notées A, le nombre binaire de n bits AV1 représentant l'état d'un compteur-décompteur 57. Ce nombre AV1 commande l'affaiblissement inséré par la ligne d'affaiblissement variable 15. Le comparateur 56 délivre deux signaux notés $A=B$ et $A<B$ ($A=B$ est égal à "1" si $A=B$ et à "0" si $A\neq B$ ; $A<B$ est égal à "1" si $A<B$ et à "0" si $A\geq B$). Le fonctionnement du compteur-décompteur 57 est géré par un dispositif 52. Un soustracteur 58 délivre un nombre binaire $AV2=AVmax-AV1$ qui commande l'affaiblissement de la ligne 25.

La figure 10 montre plus en détail le fonctionnement du comparateur 51. Un comparateur différentiel 514 a une sortie analogique pouvant prendre deux valeurs distinctes +V ou -V. C'est un comparateur avec deux sortes d'hystérésis, l'une de valeur fixe, l'autre de valeur relative. La première sorte d'hystérésis est importante pour des signaux d'entrée de niveau faible, elle ajout sur l'entrée + du comparateur 514 à l'aide d'un sommateur 513 une valeur indépendante des entrées SM1 et SM2 et égale à une proportion K3 définie (dans un circuit 515) de la sortie du comparateur, confortant ainsi l'état du comparateur. Un étage d'adaptation 516 fait correspondre à une sortie analogique +V ou -V, une sortie notée CST respectivement égale à "1" et à "0". Les circuits 511 et 512 sont des atténuateurs commandés par la sortie CST et par $\overline{CST}$ obtenu dans un inverseur 517. A la sortie de 511 on trouve un signal égal à K1SM1, K1 étant égal à 1 si la sortie CST est égale à "1" et $K1=\alpha<1$ si $CST=0$. A la sortie de 512 on trouve un signal égal à K2SM2, K2 étant égal à "1" si $CST=0$ et $K2=\alpha<1$ si $CST=1$. Ainsi, pour que CST passe de l'état "1" (correspondant au choix de la voie d'émission) à l'état "0" (choix de la voie de réception) il faut que la

relation suivante soit vérifiée :

$K2SM2 > K1SM1 + K3V$ avec $K1 = 1$ ; $K2 = \alpha < 1$

(Exemple : $|K3V| = 1/100$ de la valeur maximum possible de SM1 ou de SM2 ; et $\alpha = 0,5$).

Ces hystérésis garantissent la stabilité du choix de la voie active, d'une part, pour les faibles niveaux de SM1 et de SM2 et, d'autre part, pour des niveaux très proches de SM1 et SM2.

La figure 11 montre en détail le dispositif 52 de contrôle du compteur-décompteur 57. Une horloge 527 délivre un signal noté HR/HL, de période relativement rapide si SU/SB = "1" (exemple T = 2 ms) et relativement lente si SU/SB = 0 (exemple : T = 100 ms). Le compteur est en position "comptage" si le signal C/D délivré par 52 est à "1" et en position "décomptage" dans le cas contraire ; il est bloqué (sur sa dernière valeur) si le signal BL délivré par 52 est "1". Le circuit 57 envoie à 52 un signal CM (compte maximum) égal à "0" si le nombre AV1 est arrivé au maximum que peut atteindre le compteur sans déborder si C/D = "1" d'une part, et si AV1 est égal à zéro alors que C/D est à "0" d'autre part. Les signaux $\overline{CST}$ et A<B attaquent un élément d'aiguillage 521 qui laisse passer $\overline{CST}$ si SU/SB = 1 et A<B dans le cas contraire.

Le fonctionnement peut être décrit ainsi :

1) - SU/SB = 1 (signal utile), C/D = $\overline{CST}$ donc C/D = 0 (et AV1 diminue) si CST = 1 (émission active) et C/D = 1 (et AV1 augmente) si CST = 0 (réception active). Si $\overline{CST}$ = 1 la sortie de la porte OU 523 est égale à 1, la sortie de la porte ET 524 est à 1 si A = B et donc la sortie de la porte OU 526 qui délivre BL, aussi. Donc le compteur est bloqué en phase comptage si AV1 = AVmax.

Si $\overline{CST}$ = 0, les sorties des portes 523 et 524 sont à 0 et BL est à 1 si la sortie de l'inverseur 525 est à 1, donc si CM = 0, et si AV1 = 0. Il en résulte que le compteur est bloqué en phase décomptage si AV1 = 0.

2) - SU/SB = 0 (signal de bruit, C/D = A<B).

Donc C/D = 1 (et AV1 augmente) si AV1<1/2AVmax et C/D = 0 (et AV1 diminue) si AV1>1/2AVmax.

La sortie de 523 est toujours égale à 1, donc la sortie de la porte 524 est à 1 si A = B, donc BL = 1 si A = B.

Le compteur est bloqué si AV1 = 1/2AVmax.

## Revendications

1. Circuit de transmission à double sens ayant une première voie amplifiatrice (AMP1) fonctionnant dans un premier sens de transmission et comprenant une première ligne (15) d'affaiblissement variable (AV1), et une seconde voie amplificatrice (AMP2) fonctionnant dans un second sens de transmission et comprenant une seconde ligne (25) d'affaiblissement variable (AV2), le dispositif comprenant un circuit de commande des affaiblissements (CAV) ayant deux entrées (e1, e2) reliées respectivement aux première et seconde voies et recevant à partir de ces voies, respectivement des signaux détectés ci-après désignés SE1 et SE2, ces signaux étant obtenus à partir des première et deuxième voies amplificatrices, en amont des première et seconde lignes d'affaiblissement, le circuit de commande (CAV) qui inclut un circuit (5) de calcul des affaiblissements variables (AV1 et AV2) étant apte à commander chacun des affaiblissements variables (AV1 et AV2) en fonction des signaux qu'il reçoit, de telle manière que la relation AV2 = AVmax-AV1 soit satisfaite en permanence pour les deux sens de transmission, le dispositif étant caractérisé par le fait que le circuit (CAV) de commande des affaiblissements comprend :
   - un circuit de discrimination (3) de signal utile par rapport au bruit, ayant des entrées recevant les premier et deuxième signaux détectés (SE1 et SE2), et une sortie délivrant un signal logique (SU/SB) indiquant si la demi-somme desdits signaux d'entrée (SE1 + SE2)/2 est supérieure ou non à un seuil donné (SEmin),
   - un circuit de correction (4) à trois entrées, l'une recevant le signal logique (SU/SB) et les deux autres respectivement les premier et deuxième signaux détectés (SE1 et SE2), ce circuit de correction possédant deux sorties délivrant des premier et second signaux corrigés (SM1, SM2), le premier signal corrigé (SM1) étant égal au premier signal détecté (SE1) auquel est ajouté un signal de correction (SE)c et le second signal corrigé (SM2) étant égal au second signal détecté (SE2) auquel est retranché ledit signal de correction (SE)c, ce signal de correction évoluant de la manière suivante :

   a) pendant les périodes de signal utile où le signal logique SU/SB indique que la demi-somme des signaux d'entrée est supérieure au seuil (SEmin) : (SE)c ne varie pas,

b) pendant les périodes où le signal logique (SU/SB) indique que cette demi-somme est inférieure au seuil :

i) si SM1>SM2 :

(SE)c décroît jusqu'à ce que SM1 soit égal à SM2 et à la valeur commune (SE1 + SE2)/2, puis ne varie plus,

ii) si SM1<SM2 :

(SE)c croît jusqu'à ce que SM1 soit égal à SM2 à la valeur commune (SE1 + SE2)/2, puis ne varie plus,

- un circuit de calcul des affaiblissements (5) ayant une première entrée reliée à la suite du circuit de discrimination (3) et recevant le signal logique (SU/SB) et deux autres entrées recevant les premier et second signaux corrigés (SM1, SM2), ce circuit (5) de calcul des affaiblissements ayant en outre deux sorties délivrant des signaux aptes à commander les affaiblissements (AV1 et AV2) des atténuateurs à affaiblissement variable (15, 25) de la manière suivante :

  1) si le signal logique (SU/SB) indique que (SE1 + SE2)/2 est inférieur au seuil donné (SEmin) :

  . AV1 est égal à 1/2AVmax ou tend vers cette valeur avec une constante de temps donnée (t2),

  2) si le signal logique (SU/SB) indique que (SE1 + SE2)/2 est supérieur ou égal au seuil donné (SEmin) :

  a) si SM1>SM2

  . AV1 est égal à 0 ou tend vers 0 avec une deuxième constante de temps (t1) inférieure à ladite constante de temps donnée (t2),

  b) si SM1<SM2

  . AV1 est égal à AVmax ou tend vers cette valeur avec la deuxième constante de temps.

**2.** Circuit de transmission selon la revendication 1, caractérisé en ce que le signal représentatif du seuil donné (SEmin) a une valeur prédéterminée.

**3.** Circuit de transmission selon la revendication 1, caractérisé en ce que le signal représentatif du seuil donné (SEmin) a une valeur variable.

**4.** Circuit de transmission selon la revendication 3, caractérisé en ce que le circuit de discrimination (3) comporte des moyens (31, 32, 33, 34, 35, 36, 37) pour délivrer le signal variable représentatif du seuil donné, ces moyens étant tels que ledit signal variable est constitué de la somme d'une première composante fixe ($\epsilon$) et d'une deuxième composante croissante ou décroissante (Vs), ladite deuxième composante (Vs) étant croissante jusqu'à atteindre une valeur maximale donnée si elle reste inférieure à la demi-somme desdits signaux d'entrée (SE1 + SE2)/2 pendant un intervalle de temps supérieur à une durée fixée (Tmax), et décroissante dans tous les autres cas.

**5.** Circuit de transmission selon l'une quelconque des revendications 1 à 4, caractérisé en ce que le signal de correction (SE)c est limité en valeur absolue à une valeur maximale donnée.

**6.** Circuit de transmision selon l'une quelconque des revendications 1 à 7, caractérisé en ce que la sortie de la première voie amplificatrice (AMP1) est couplée à l'entrée (E2) de la seconde voie amplificatrice (AMP2) avec un affaiblissement (A1), et la sortie de la seconde voie amplificatrice est couplée à l'entrée (E1) de la première voie amplificatrice avec un affaiblissement (A2), l'affaiblissment prédéterminé AVmax étant choisi tel que : AVmax>(G1' + G2')-(A1 + A2), G1' et G2' étant le gains d'amplificateur de gain fixe insérés dans les première et deuxième voies amplificatrices, en amont des première et seconde lignes d'affaiblissement variable.

**7.** Circuit de transmission selon la revendication 6, caractérisé en ce que les signaux (SE1 et SE2) sont obtenus à partir des première et deuxièmes voies par l'intermédiaire d'affaiblisseurs ayant des affaiblissements respectifs (A11 et A21), lesdits affaiblissements étant tels que :

$$\text{si } A2 > A1, \begin{cases} A21 = (A2-A1)/2 \\ A11 = 0 \end{cases}$$

$$\text{si } A1 > A2, \begin{cases} A11 = (A1-A2)/2 \\ A21 = 0 \end{cases}$$

**8.** Circuit de transmission selon l'une quelconque des revendications 1 à 7, caractérisé en ce que le circuit (5) de calcul des affaiblissements comporte un circuit d'entrée constitué par un comparateur (514) qui délivre un signal bipolaire ayant une amplitude donnée et une polarité qui est fonction du résultat de la comparaison entre les signaux appliqués sur ses entrées, l'une des entrées recevant ledit signal (SM2) par l'intermédiaire d'un premier moyen d'atténuation (512), l'autre des entrées recevant le signal (SM1) par l'intermédiaire d'un deuxième moyen d'atténuation (511), augmenté d'une proportion (K3) du signal bipolaire, le premier et le deuxième moyens d'atténuation (511, 512) étant commandés en fonction de l'état du signal bipolaire de telle sorte qu'ils occupent un premier état dans lequel l'un des moyens d'atténuation produit une première atténuation prédéterminée (K1) tandis que l'autre n'en produit pas, ou un deuxième état dans lequel ledit autre moyen produit une deuxième atténuation prédéterminée (K2) tandis que l'autre moyen d'atténuation n'en produit pas.

**9.** Circuit de transmission selon la revendication 8, caractérisé en ce qu'il comporte un moyen (57) sensible à la polarité dudit signal bipolaire et audit signal logique (SU/SB) pour déterminer la valeur de l'un (AV1) des affaiblissements variables, et un organe de calcul (58) recevant le signal de valeur affichée pour en déduire la valeur de l'autre (AV2) des affaiblissements variables.

**Claims**

**1.** Bi-directional transmission circuit having a first amplifying channel (AMP1) operating in a first direction of transmission and comprising a first line (15) with variable attenuation (AV1), and a second amplifying channel (AMP2) operating in a second direction of transmission and comprising a second line (25) with variable attenuation (AV2), the device comprising an attenuation control circuit (CAV) having two inputs (e1, e2) connected respectively to the first and second channels and receiving from these channels, respectively detected signals hereinafter designated SE1 and SE2, these signals being obtained from the first and second amplifying channels, on the input side of the first and second attenuation lines, the control circuit (CAV) which includes a circuit (5) for calculating the variable attenuations (AV1 and AV2) being able to control each of the variable attenuations (AV1 and AV2) as a function of the signals which it receives, in such a way that the relationship AV2 = AVmax - AV1 be continuously satisfied for both directions of transmission, the device being characterised in that the circuit (CAV) for controlling the attenuations comprises:

- a circuit (3) for discriminating useful signal relative to noise, having inputs receiving the first and second detected signals (SE1 and SE2), and an output delivering a logic signal (SU/SB) indicating whether the half-sum of the said input signals (SE1 + SE2)/2 is or is not greater than a given threshold (SEmin),
- a correction circuit (4) having three inputs, one receiving the logic signal (SU/SB) and the other two respectively the first and second detected signals (SE1 and SE2), this correction circuit possessing two outputs delivering first and second corrected signals (SM1, SM2), the first corrected signal (SM1) being equal to the first detected signal (SE1) to which is added a correction signal (SE)c and the second corrected signal (SM2) being equal to the second detected signal (SE2) from which is subtracted the said correction signal (SE)c, this correction signal evolving in the following way:

  a) during the periods of useful signal in which the logic signal SU/SB indicates that the half-sum of the input signals is greater than the threshold (SEmin): (SE)c does not vary,

  b) during the periods in which the logic signal (SU/SB) indicates that this half-sum is less than the threshold:

  i) if SM1 > SM2:

  (SE)c falls until SM1 is equal to SM2 and to the common value (SE1 + SE2)/2, then varies no

longer,
ii) if SM1 < SM2:
(SE)c rises until SM1 is equal to SM2 and to the common value (SE1 + SE2)/2, then varies no longer,

- an attenuation calculating circuit (5) having a first input connected after the discrimination circuit (3) and receiving the logic signal (SU/SB) and two other inputs receiving the first and second corrected signals (SM1, SM2), this circuit (5) for calculating the attenuations furthermore having two outputs delivering signals able to control the attenuations (AV1 and AV2) of the variable attenuation attenuators (15, 25) in the following way:
1) if the logic signal (SU/SB) indicates that (SE1 + 5E2)/2 is less than the given threshold (SEmin):
. AV1 is equal to 1/2AVmax or tends to this value with a given time constant (t2),
2) if the logic signal (SU/SB) indicates that (SE1 + SE2)/2 is greater than or equal to the given threshold (SEmin):
a) if SM1 > SM2
. AV1 is equal to 0 or tends to 0 with a second time constant (t1) less than the said given time constant (t2),
b) if SM1 < SM2
. AV1 is equal to AVmax or tends to this value with the second time constant.

**2.** Transmission circuit according to Claim 1, characterised in that the signal representing the given threshold (SEmin) has a predetermined value.

**3.** Transmission circuit according to Claim 1, characterised in that the signal representing the given threshold (SEmin) has a variable value.

**4.** Transmission circuit according to Claim 3, characterised in that the discrimination circuit (3) comprises means (31, 32, 33, 34, 35, 36, 37) for delivering the variable signal representing the given threshold, these means being such that the said variable signal is constituted by the sum of a first fixed component ($\epsilon$) and a second rising or falling component (Vs), the said second component (Vs) rising until attaining a maximum given value if it remains less than the half-sum of the said input signals (SE1 + SE2)/2 for an interval of time greater than a fixed duration (Tmax), and falling in all other cases.

**5.** Transmission circuit according to any one of Claims 1 to 4, characterised in that the correction signal (SE)c is bounded in absolute value to a given maximum value.

**6.** Transmission circuit according to any one of Claims 1 to 7, characterised in that the output of the first amplifying channel (AMP1) is coupled to the input (E2) of the second amplifying channel (AMP2) with an attenuation (A1), and the output of the second amplifying channel is coupled to the input (E1) of the first amplifying channel with an attenuation (A2), the predetermined attenuation AVmax being chosen such that: AVmax > (G1' + G2') - (A1 + A2), G1' and G2' being the fixed-gain amplifier gains inserted into the first and second amplifying channels, on the input side of the first and second variable attenuation lines.

**7.** Transmission circuit according to Claim 6, characterised in that the signals (SE1 and SE2) are obtained from the first and second channels via attenuators having respective attenuations (A11 and A21), the said attenuations being such that:

$$\text{if } A2 > A1, \quad \begin{cases} A21 = (A2-A1)/2 \\ A11 = 0 \end{cases}$$

$$\text{if } A1 > A2, \quad \begin{cases} A11 = (A1-A2)/2 \\ A21 = 0 \end{cases}$$

8. Transmission circuit according to any one of Claims 1 to 7, characterised in that the circuit (5) for calculating the attenuations comprises an input circuit constituted by a comparator (514) which delivers a bipolar signal having a given amplitude and a polarity which is a function of the result of the comparison between the signals applied to its inputs, one of the inputs receiving the said signal (SM2) via a first means of attenuation (512), the other of the inputs receiving the signal (SM1) via a second means of attenuation (511), increased by a proportion (K3) of the bipolar signal, the first and the second means of attenuation (511, 512) being controlled as a function of the state of the bipolar signal so that they occupy a first state in which one of the means of attenuation produces a first predetermined attenuation (K1) whilst the other produces none, or a second state in which the said other means produces a second predetermined attenuation (K2) whilst the other means of attenuation produces none.

9. Transmission circuit according to Claim 8, characterised in that it comprises a means (57) sensitive to the polarity of the said bipolar signal and to the said logic signal (SU/SB) for determining the value of one (AV1) of the variable attenuations, and a calculating unit (58) receiving the signal with exhibited value for deducing therefrom the value of the other (AV2) of the variable attenuations.

**Patentansprüche**

1. Doppelgerichtete Übertragungsschaltung mit einem ersten Verstärkungspfad (AMP1), der in einer ersten Übertragungsrichtung wirkt und eine erste Leitung (15) für eine veränderliche Dämpfung (AV1) aufweist, und mit einem zweiten Verstärkungspfad (AMP2), der in einer zweiten Übertragungsrichtung wirkt und eine zweite Leitung (25) für eine veränderliche Dämpfung (AV2) aufweist, wobei die Einrichtung einen Dämpfungssteuerkreis (CAV) aufweist, der zwei Eingänge (e1, e2) hat, die jeweils mit dem ersten und zweiten Pfad verbunden sind und von diesen Pfaden jeweils in Folgenden als SE1 und SE2 bezeichnete, detektierte Signale empfangen, wobei diese Signale nach dem ersten und zweiten Verstärkungspfad stromaufwärts der ersten und zweiten Dämpfungsleitungen erhalten werden, wobei der Steuerkreis (CAV), der einen Schaltkreis zur Berechnung der veränderlichen Dämpfungen (AV1 und AV2) aufweist, zur Steuerung jeder der veränderlichen Dämpfungen (AV1 und AV2) in Abhängigkeit von den druch ihn empfangenen Signalen geeignet ist, derart, daß die Beziehung AV2 = AVmax - AV1 für die beiden Übertragungsrichtungen permanent erfüllt ist, wobei die Einrichtung dadurch **gekennzeichnet** ist, daß der Dämpfungssteuerschaltkreis (CAV) aufweist:
   - einen Diskriminatorschaltkreis (3) zur Trennung von Nutzsignalen von Rauschsignalen mit Eingängen, die das erste und zweite detektierte Signal (SE1 und SE2) empfangen, und mit einem Ausgang, der ein logisches Signal (SU/SB) abgibt, welches angibt, ob die halbe Summe dieser Eingangssignale (SE1 + SE2)/2 über oder unter einem gegebenen Schwellenwert (SEmin) liegt,
   - einen Korrekturschaltkreis (4) mit drei Eingängen, von denen einer das logische Signal (SU/SB) und die beiden anderen jeweils das erste und zweite detektierte Signal (Se1 und SE2) empfängt, wobei der Korrekturschaltkreis zwei Ausgänge aufweist, die erste und zweite korrigierte Signale (SM1, SM2) abgeben, wobei das erste korrigierte Signal (SM2) gleich dem ersten detektierten Signal (SE1), zu dem ein Korrekturssignal (SE)c hinzugefügt wurde, und das zweite korrigierte Signal (SM2) gleich dem zweiten detektierten Signal (SE2), von dem das Korrektursignal (SE)c abgezogen wurde, ist, wobei das Korrektursignal wie folgt gewonnen wird:
     a) während der Zeitdauern des Nutzsignals, wenn das logische Signal (SU/SB) angibt, daß die halbe Summe der Eingagssignale größer als der Schwellenwert (SEmin) ist, gilt: (SE)c ändert sich nicht,
     b) während der Zeitdauern, wenn das logische Signal (SU/SB) angibt, daß die halbe Summe unterhalb des Schwellenwerts liegt, gilt:
        i) wenn SM1 > SM2:
        (SE)c nimmt soweit ab, bis SM1 gleich SM2 ist und bis zu einem gemeinsamen Wert (SE1 + SE2) /2, dann ändert es sich nicht mehr,
        ii) wenn SM1 < SM2:
        (SE)c nimmt soweit zu, bis SM1 gleich SM2 ist, bis zu einem gemeinsamen Wert (SE1 + SE2) /2, dann ändert es sich nicht mehr,
   - einen Schaltkreis (5) zur Berechnung der Dämpfungen mit einem ersten Eingang, der nach dem Diskriminatorschaltkreis (3) angeschlossen ist und das logische Signal (SU/SB) empfängt, und mit zwei weiteren Eingängen, die das erste und zweite korrigierte Signal (SM1, SM2) empfängt, wobei der Schaltkreis (5) zur Berechnung der Dämpfungen zwei weitere Ausgänge aufweist, die

Signale abgeben, die geeignet sind, die Dämpfungen (AV2 und AV2) der Dämpfungseinrichtungen für veränderliche Dämpfungen (15, 25) folgendermaßen zu steuern:

1) wenn das logische Signal (SU/SB) angibt, daß (SE1 +SE2)/2 unterhalb des vorgegebenen Schwellenwerts (SEmin) liegt, dann gilt:

. AV1 ist gleich 1/2 Avmax oder nähert sich mit einer vorgegebenen Zeitkonstante (t2) diesem Wert,

2) wenn das logische Signal (SU/SB) angibt, daß (SE1 +SE2)/2 oberhalb des vorgegebenen Schwellenwerts (SEmin) liegt oder gleich diesem ist, dann gilt:

a) wenn SM1 > SM2:

. AV1 ist gleich 0 oder nähert sich mit einer zweiten Zeitkonstante (t1), die niedriger als die erste vorgegebene Zeitkonstante (t2) ist, diesem Wert,

b) wenn SM1 < SM2:

. AV1 ist gleich AVmax oder nähert sich mit der zweiten Zeitkonstante diesem Wert.

**2.** Übertragungsschaltung nach Anspruch 1, **dadurch gekennzeichnet, daß** das dem vorgegebenen Schwellenwert (SEmin) entsprechende Signal einen vorbestimmten Wert hat.

**3.** Übertragungsschaltung nach Anspruch 1, **dadurch gekennzeichnet, daß** das dem vorgegebenen Schwellenwert (SEmin) entsprechende Signal einen veränderlichen Wert hat.

**4.** Übertragungsschaltung nach Anspruch 3, **dadurch gekennzeichnet, daß** der Diskriminatorschaltkreis (3) Einrichtungen (31, 32, 33, 34, 35, 36 37) zum Abgeben des veränderlichen, den Schwellenwert repräsentierenden Signals aufweist, wobei die Einrichtungen derart ausgebildet sind, daß das veränderliche Signal aus der Summe einer ersten feststehenden Komponente ($\epsilon$) und einer zweiten zuoder abnehmenden Komponente (Vs) zusammengesetzt ist, wobei die zweite Komponente (Vs), wenn sie während einer eine vorgegebene Zeitdauer (Tmax) überschreitenden Zeitdauer unterhalb der halben Summe der Eingangssignale (SE1 +SE2)/2 bleibt, bis zum Erreichen eines vorgegebenen Maximalwerts zunimmt und in allen anderen Fällen abnimmt.

**5.** Übertragungsschaltung nach einem der Ansprüche 1 bis 4, **dadurch gekennzeichnet, daß** das Korrektursignal (SE)c in der absoluten Größe auf einen vorgegebenen Maximalwert begrenzt ist.

**6.** Übertragungsschaltung nach einem der Ansprüche 1 bis 5, **dadurch gekennzeichnet, daß** der Ausgang des ersten Verstärkungspfades (AMP1) mit dem Eingang (E2) des zweiten Verstärkungspfades (AMP2) mit einer Dämpfung (A1) verbunden ist, und daß der Ausgang des zweiten Verstärkungspfades mit dem Eingang (E1) des ersten Verstärkungspfades mit einer Dämpfung (A2) verbunden ist, wobei die vorgegebene Dämpfung AVmax so gewählt ist, daß AVmax > (G1' + G2')-(A1 + A2), worin G1' und G2' die Verstärkungsgrade der einen festen Verstärkungsgrad aufweisenden Verstärker sind, die in der ersten und zweiten Dämpfungsleitung stromaufwärts von der ersten und zweiten veränderlichen Dämpfungsleitung eingesetzt sind.

**7.** Übertragungsschaltung nach Anspruch 6, **dadurch gekennzeichnet, daß** man die Signale (SE1 und SE2) nach dem ersten und zweiten Pfad durch Dämpfungseinrichtungen erhalten werden, die entsprechende Dämpfungsgrade (A11 und A12) haben, wobei die Dämpfungen folgendermaßen sind:

$$\text{wenn } A2 > A1; \begin{cases} A21 = (A2-A1)/2 \\ A11 = 0 \end{cases}$$

$$\text{wenn } A1 > A2; \begin{cases} A11 = (A1-A2)/2 \\ A21 = 0. \end{cases}$$

**8.** Übertragungsschaltung nach einer der Ansprüche 1 bis 7, **dadurch gekennzeichnet, daß** der Schaltkreis (5) zur Berechnung der Dämpfung einen Eingangsschaltkreis aufweist, der aus einem

Vergleicher (514) besteht, der ein bipolares Signal abgibt, welches eine vorgegebene Amplitude und ein Polarität hat, die eine Funktion des Resultats des Vergleichs der an den Eingängen anliegenden Signale ist, wobei der eine Eingang über eine erste Dämpfungseinrichtung (512) das Signal (SM2), der andere Eingang über eine zweite Dämpfungseinrichtung (511) das Signal (SM1) erhält, welches um einen Anteil (K3) des bipolaren Signals verstärkt ist, wobei die erste und zweite Dämpfungseinrichtung (511, 512) in Abhängigkeit von dem Zustand des bipolaren Signals derart gesteuert werden, daß sie einen ersten Zustand, bei dem eine der Dämpfungseinrichtungen eine erste vorbestimmte Dämpfung (K1) erzeugt, während die andere keine erzeugt, oder einen zweiten Zustand annehmen, bei dem die andere Einrichtung eine zweite vorbestimmte Dämpfung (K2) erzeugt, während die erste Einrichtung keine erzeugt.

9. Übertragungsschaltung nach Anspruch 8, **dadurch gekennzeichnet, daß** sie eine Einrichtung (57), die auf die Polarität des bipolaren Signals und auf das logische Signal (SU/SB) anspricht, um den Wert der veränderlichen Dämpfung (AV1) zu bestimmen, und ein Rechenelement (58) aufweist, das das Signal des angezeigten Werts empfängt, um davon den Wert der anderen veränderlichen Dämpfung (AV2) abzuleiten.

FIG. 1

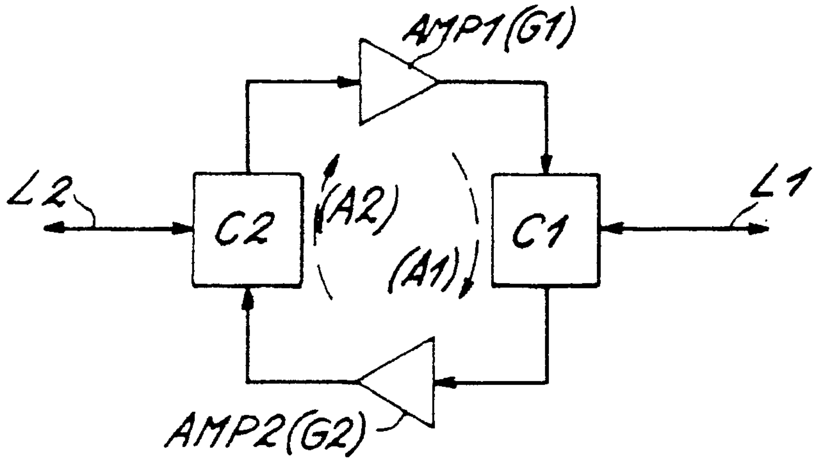


FIG. 2

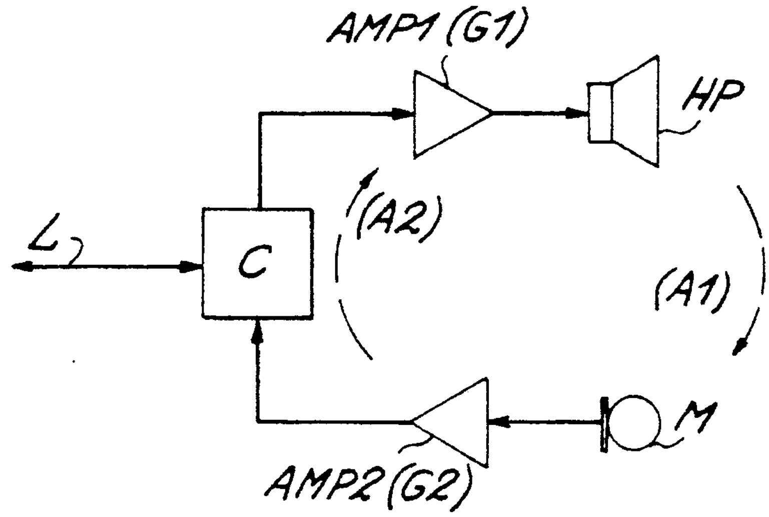


FIG. 3

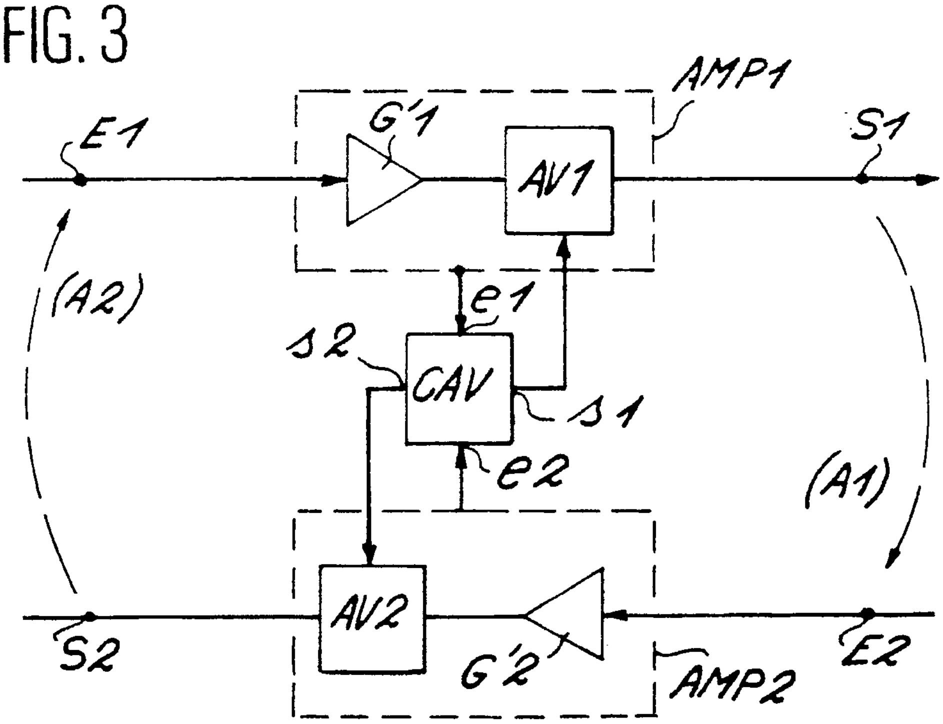

FIG. 4

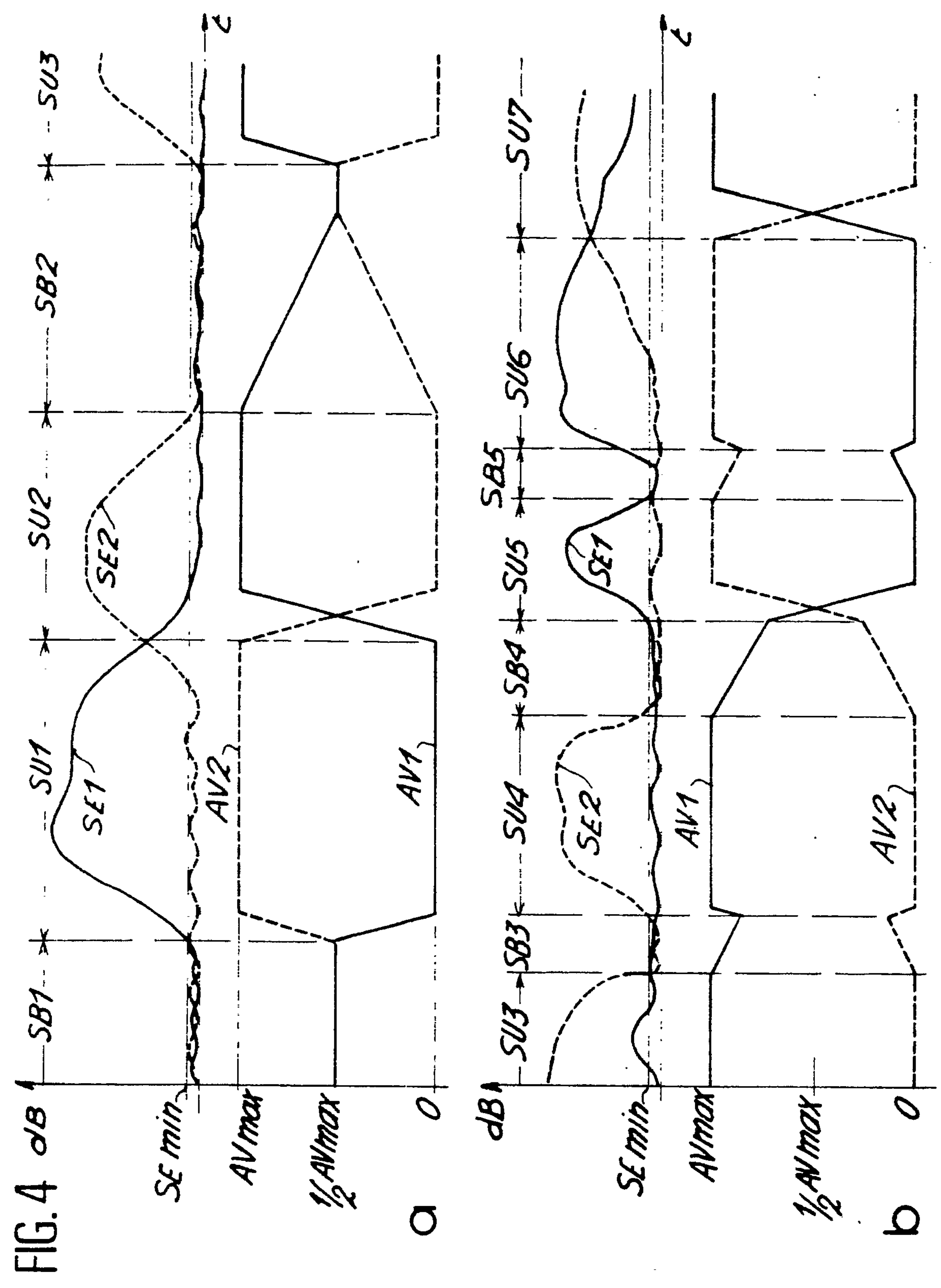
a
dB
SE min
AVmax
½ AVmax
0
t
SB1
SU1
SU2
SB2
SU3
SE1
SE2
AV1
AV2
b
dB
SE min
AVmax
½ AVmax
0
t
SU3
SB3
SU4
SB4
SU5
SB5
SU6
SU7
SE1
SE2
AV1
AV2

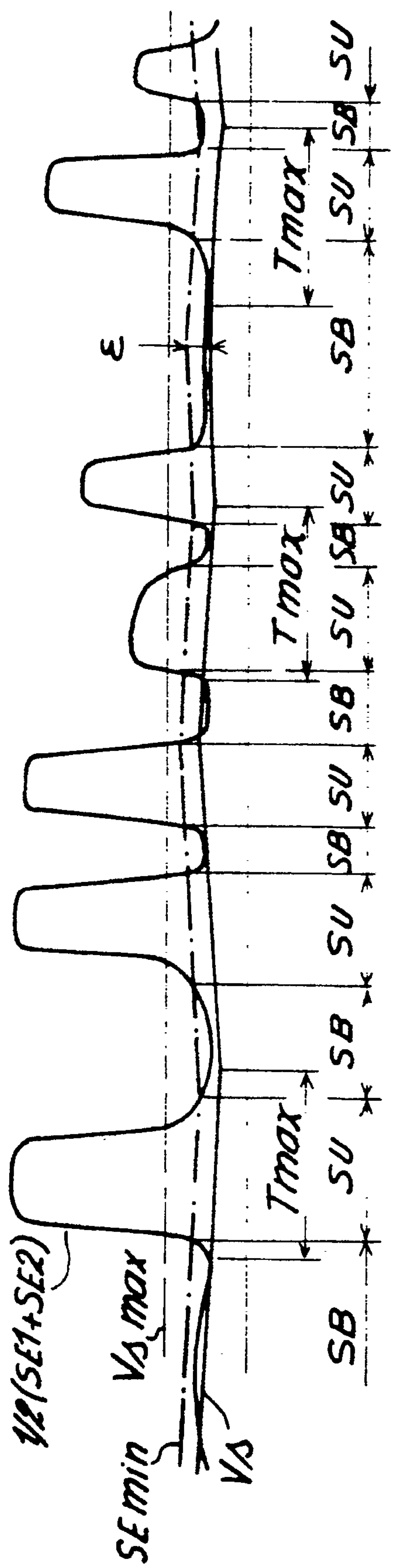
1/2(SE1+SE2)
VΔ max
SEmin
VΔ
ε
Tmax
Tmax
Tmax
SB
SU
SB
SU
SB
SU
SB
SU
SB
SU
SB
SU
SB
SU

FIG. 5

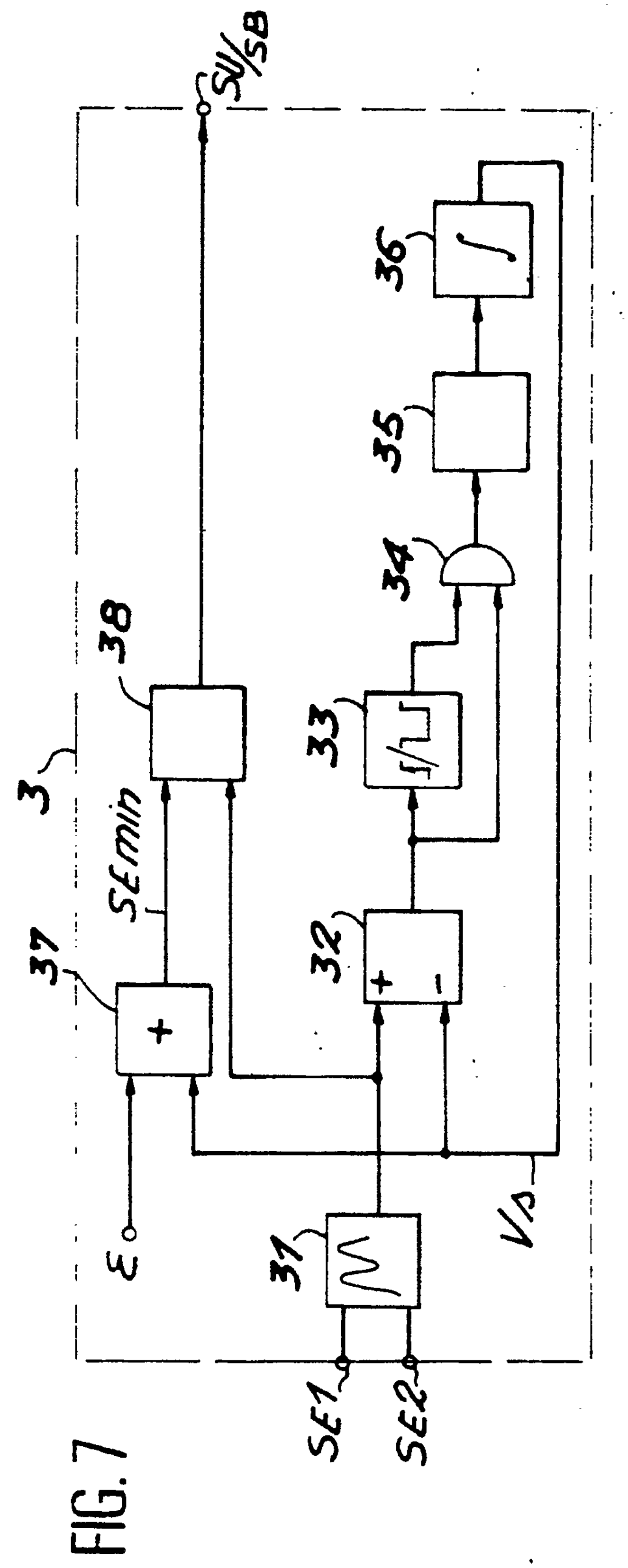
SU/SB
3
31
32
33
34
35
36
37
38
SEmin
ε
VΔ
SE1
SE2
+
+
-

FIG. 7

FIG. 6

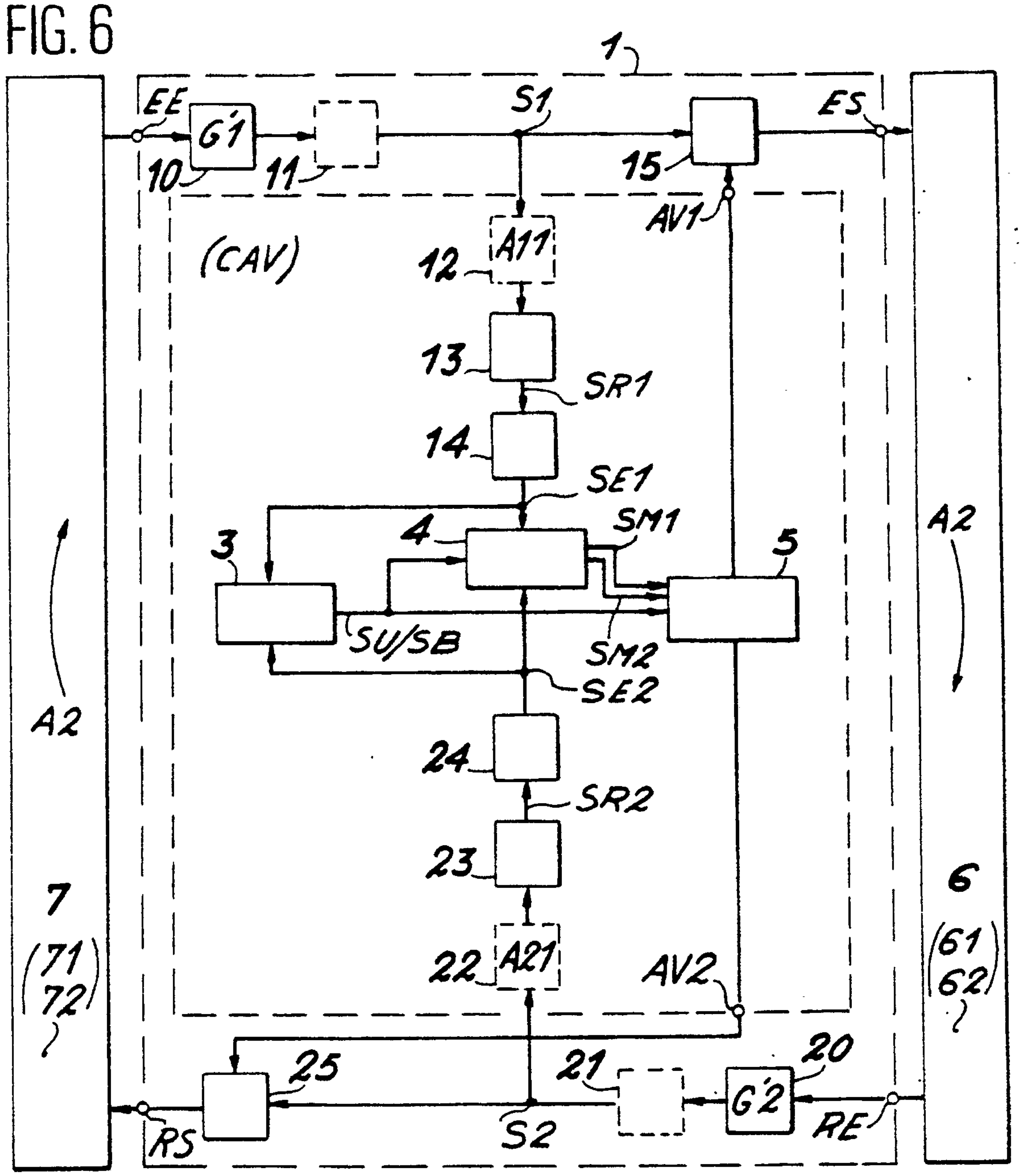
1
EE
G'1
10
11
S1
15
ES
AV1
(CAV)
A11
12
13
SR1
14
SE1
SM1
3
4
5
SU/SB
SM2
SE2
24
SR2
23
A21
22
AV2
A2
7
(71
72)
6
(61
62)
25
21
20
G'2
RS
S2
RE

FIG. 8

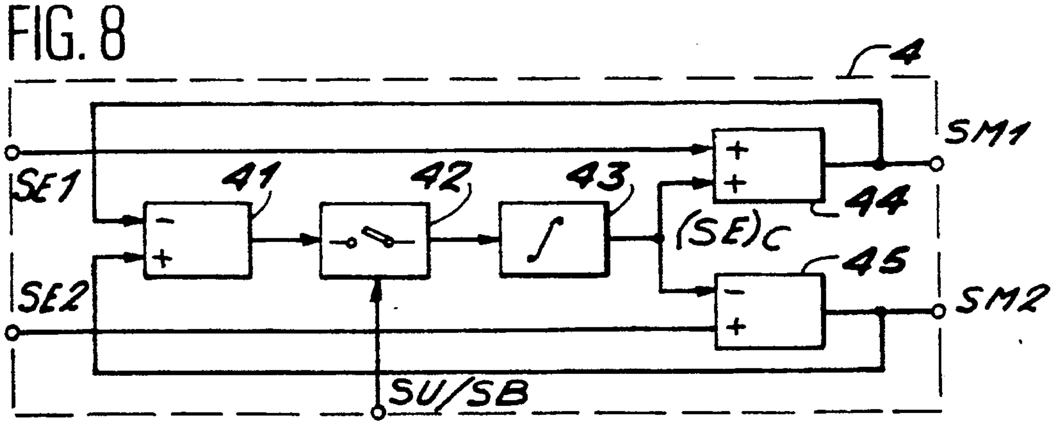
4
SM1
SE1
41
42
43
44
(SE)C
45
SE2
SM2
SU/SB

FIG 9

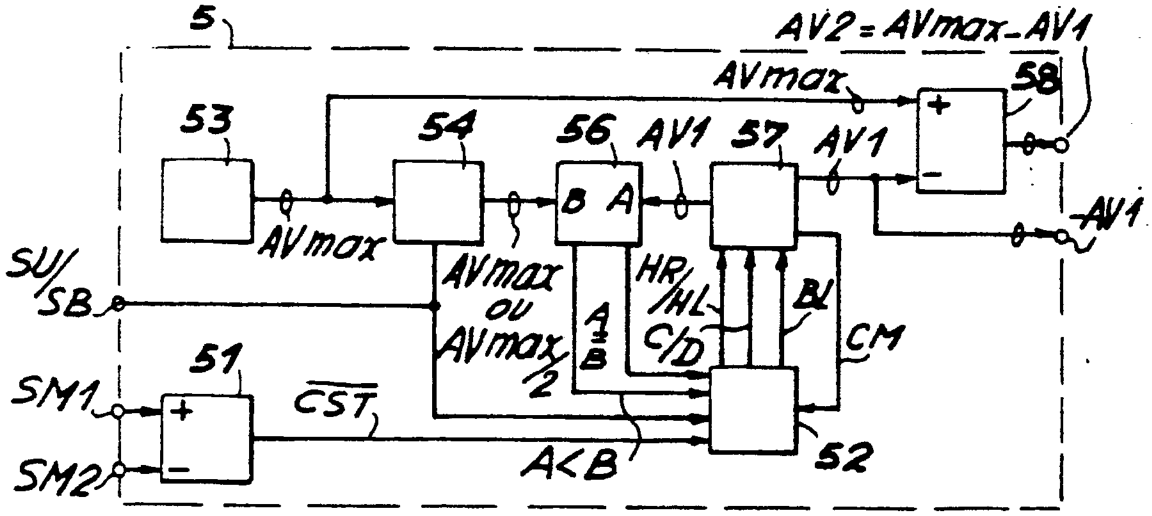


FIG. 10

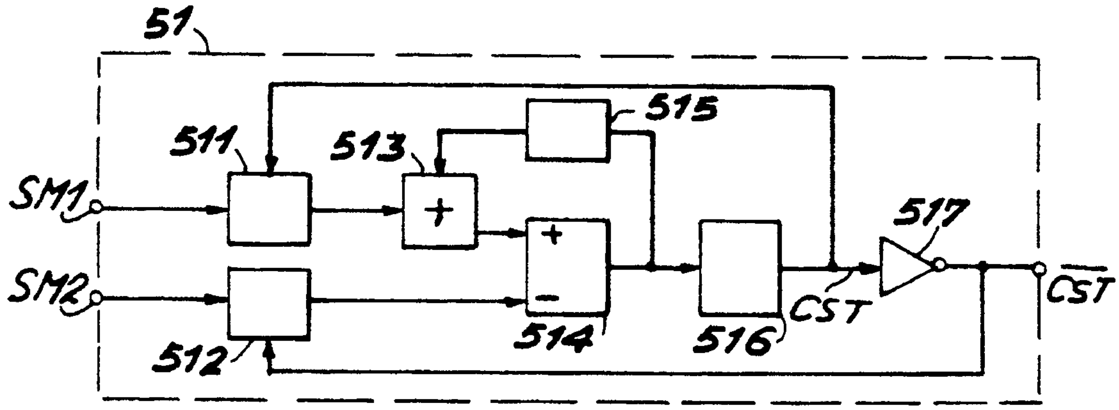


FIG. 11